# FASCICULE DE BREVET EUROPEEN

(11) **EP 2 675 932 B1**
(45) Date de publication et mention de la délivrance du brevet: **16.08.2017**
(21) Numéro de dépôt: 12709904.2
(22) Date de dépôt: 16.02.2012
(51) Int. Cl.: C22C 21/00, C22B 9/02, C22F 1/04, B22D 1/00

(54) **PROCÉDÉ DE FABRICATION D'UN DEMI-PRODUIT EN ALLIAGE D'ALUMINIUM A MICROPOROSITE AMELIOREE ET INSTALLATION POUR METTRE EN OUVRE LE PROCÉDÉ**
HALBFERTIGES ERZEUGNIS AUS EINER ALUMINIUMLEGIERUNG MIT VERBESSERTER MIKROPOROSITÄT UND HERSTELLUNGSVERFAHREN
SEMI-FINISHED PRODUCT MADE OF ALUMINIUM ALLOY HAVING IMPROVED MICROPOROSITY AND MANUFACTURING PROCESS

(30) Priorité: 18.02.2011 FR 1100505; 18.02.2011 US 201161444274 P
(43) Date de publication de la demande: 25.12.2013
(73) Titulaire: Constellium Issoire, 63500 Issoire (FR)
(72) Inventeur: JARRY, Philippe, F-38000 Grenoble (FR)
(74) Mandataire: Constellium - Propriété Industrielle
(86) Numéro de dépôt international: PCT/FR2012/000061
(87) Numéro de publication internationale: WO 2012/110717

(56) Documents cités:
- EP-A1- 0 027 052
- EP-A2- 0 300 136
- WO-A1-00/65109
- WO-A1-2011/127402
- WO-A2-93/19873
- CH-A5- 669 795
- FR-A- 1 137 785
- US-A- 4 564 059
- US-A1- 2007 235 159

## Description

### Domaine de l'invention

L'invention concerne les demi-produits en alliage d'aluminium fabriqués par coulée semi-continue verticale avec refroidissement direct tels que les plaques de laminage et les billettes de filage, plus particulièrement, de tels demi-produits, leurs procédés de fabrication et d'utilisation, destinés en particulier à la construction aéronautique et aérospatiale.

### Etat de la technique

Les tôles fortes et les profilés épais en alliage d'aluminium sont utilisés notamment dans la construction aéronautique et aérospatiale. Ces produits sont obtenus en général par un procédé comprenant la coulée semi-continue verticale d'un demi produit, plaque de laminage ou billette de filage, optionnellement l'homogénéisation, la déformation à chaud par laminage ou filage, la mise en solution et la trempe d'un alliage d'aluminium. Les alliages les plus couramment utilisés sont les alliages de la série 2XXX, de la série 7XXX et certains alliages de la série 8XXX contenant du lithium.

Ces produits doivent présenter notamment certaines propriétés d'usage en particulier en termes de compromis entre les propriétés de résistance mécanique statique (limite d'élasticité en traction et en compression, résistance à la rupture) et les propriétés de tolérance aux dommages (ténacité, résistance à la propagation des fissures en fatigue), ces propriétés étant en général antinomiques.

Il est connu que les propriétés de tolérance au dommage peuvent être influencées notamment par la présence dans les produits épais d'inclusions non métalliques et de microporosité.

Les micropores apparaissent lors de la coulée des plaques et sont ensuite partiellement ou totalement rebouchées par le procédé de laminage. Ainsi, on recherche l'élimination des micropores d'une taille supérieure à environ 90 µm qui s'avèrent particulièrement néfastes pour la tolérance aux dommages.

Le brevet US 5,772,800 décrit un procédé permettant d'obtenir des tôles fortes d'épaisseur supérieure à 50 mm caractérisées par une densité de micropores de taille supérieure à 80 µm inférieure à 0.025 micropores par cm² et un volume de microporosité de la tôle inférieur à 0.005%, dans lequel les conditions de laminage à chaud et les rapports de réduction sont adaptés en fonction du rayon du cylindre de laminage à chaud.

Ce procédé nécessite des outils particuliers de laminage à chaud et dans certains cas, en fonction des outils disponibles et des épaisseurs recherchées, il n'est pas possible d'atteindre les conditions de transformation permettant le rebouchage efficace des porosités.

Il est donc souhaitable d'atteindre dès la coulée un demi-produit présentant une faible densité de micropores de grande dimension et un faible volume de microporosité.

Il est généralement admis que le dégazage du métal liquide permet de diminuer la quantité de micropores en diminuant notamment la teneur en hydrogène. La teneur en hydrogène dans le métal liquide est mesurée par exemple à l'aide de sonde de type Telegas^{™} ou Alscan^{™} connues de l'homme du métier.

Des méthodes connues pour diminuer la teneur en hydrogène sont par exemple le traitement dans une poche de dégazage à l'aide d'un rotor par introduction de chlore et/ou d'argon. L'utilisation d'émissions ultrasoniques pour réaliser un dégazage du métal liquide est également connue.

La demande de brevet CH 669 795 décrit par exemple l'introduction de têtes ultrasoniques dans un canal de transfert depuis un four jusqu'à une fonderie de manière à obtenir le dégazage.

La demande de brevet US2007/235159 décrit un appareil et un procédé dans lequel une vibration ultrasonique est utilisée pour le dégazage du métal liquide en présence d'un gaz de purge tel que l'argon ou l'azote.

La demande internationale WO00/65109 décrit un dispositif d'injection de bulles de gaz dans un métal liquide, dans lequel le diamètre des bulles peut être diminué à l'aide d'ultrasons.

Le brevet US 4,564,059 décrit un procédé de coulée continue pour alliages légers dans lequel un traitement par ultrasons est effectué dans le dispositif de solidification optionnellement dans une zone séparée du front de solidification par un matériau poreux. Cette méthode conduit simultanément à la formation d'une structure sub-dendritique uniforme, à la diminution de la teneur en hydrogène et à une réduction de la porosité. Le positionnement de la tête ultrasonique dans le dispositif de solidification est peu pratique. La réduction de la teneur en hydrogène s'avère difficile à atteindre et dépendante de conditions externes telles que l'humidité ambiante. Il serait ainsi avantageux, à teneur en hydrogène constante, de pouvoir limiter la présence de micropores de grande dimension.

De plus les traitements thermiques ultérieurs du métal solidifié, dont notamment l'homogénéisation, le plus souvent nécessaire pour des raisons métallurgiques, ont pour conséquence l'augmentation de la dimension des micropores.

Enfin un procédé simplifié alternatif aux procédés existants, souvent difficiles à mettre en oeuvre, serait avantageux.

Il existe un besoin pour un procédé amélioré permettant d'obtenir des demi-produits non-corroyés en alliage d'aluminium tel que des plaques de laminage ou des billettes de filage, notamment en alliage 2XXX ou 7XXX, présentant une faible densité de micropores de dimension supérieure à environ 90 µm, en particulier à l'état homogénéisé, et pour un dispositif permettant de réaliser ce procédé.

### Objet de l'invention

Un premier objet de l'invention est un procédé de fabrication d'un demi-produit non-corroyé en alliage d'aluminium tel qu'une plaque de laminage ou une billette de filage, comprenant les étapes de
(i) élaboration d'un bain de métal liquide en alliage de composition, en % en poids,
   Zn: 0 - 12
   Cu : 0 - 6
   Mg : 0-6
   Li : 0 - 3
   Ag : 0 - 1
   Si < 0,5
   Fe < 0,5
   optionnellement au moins un parmi Cr, Zr, Mn, Hf, Ti, Sc, V, B, avec une teneur < 0,5, reste aluminium,
(ii) traitement par ultrasons dudit bain de métal liquide dans un four et/ou dans une cuve à l'aide d'un dispositif immergé comportant au moins un émetteur d'ultrasons,
(iii) transfert dudit bain de métal liquide ainsi traité vers un dispositif de solidification,
(iv) coulée semi-continue verticale par refroidissement direct dudit bain de métal liquide traité.

Un deuxième objet de l'invention est une installation de coulée semi-continue verticale par refroidissement direct comprenant au moins un four nécessaire à la fusion du métal et/ou à son maintien en température et/ou à des opérations de préparation du métal liquide et d'ajustement de la composition, au moins une cuve destinée à effectuer un traitement d'élimination des impuretés dissoutes et/ou en suspension dans le métal liquide, un dispositif de solidification du métal liquide par coulée semi-continue verticale par refroidissement direct comprenant au moins une lingotière, un faux-fond, un descenseur, au moins un dispositif d'approvisionnement du métal liquide et un système de refroidissement, ces différents fours, cuves et dispositifs de solidification étant reliés entre eux par des chenaux dans lesquels le métal liquide peut être transporté, caractérisée en ce que la dite installation comprend également au moins un dispositif immergé comportant au moins un émetteur d'ultrasons positionné dans un four et/ou dans une cuve.

### Description des figures

Figure 1 : Micrographies sans attaque chimique du métal solidifié non homogénéisé obtenues après traitement par ultrasons de diverses durées : Fig la : 0 mn, Fig 1b : 2 mn, Fig 1c : 6 mn, Fig 1d : 14 mn, Fig 1e : 29 mn.
Figure 2 : Micrographies sans attaque chimique du métal solidifié non homogénéisé obtenues après traitement par ultrasons de diverses durées : Fig 2a : 0 mn, Fig 2b : 2 mn, Fig 2c : 6 mn, Fig 2d : 14 mn, Fig 2e : 29 mn.
Figure 3 : Histogramme des dimensions de micropore après homogénéisation, obtenues par tomographie des rayons X.

### Description de l'invention

La désignation des alliages suit les règles de The Aluminum Association, connues de l'homme du métier. La composition chimique d'alliages d'aluminium normalisés est définie par exemple dans la norme EN 573-3.

Sauf mention contraire, les définitions de la norme européenne EN 12258-1 s'appliquent. Le problème d'amélioration du procédé de fabrication des demi-produits non corroyés présentant une faible densité de micropores de dimension supérieure à environ 90 µm est résolu par un procédé comprenant les étapes de
(i) élaboration d'un bain de métal liquide en alliage de composition, en % en poids,
   Zn : 0 - 12
   Cu : 0 - 6
   Mg : 0 - 6
   Li : 0 - 3
   Ag : 0 - 1
   Si < 0,5
   Fe < 0,5
   optionnellement au moins un parmi Cr, Zr, Mn, Hf, Ti, Sc, V, B, avec une teneur < 0,5, reste aluminium,
(ii) traitement par ultrasons dudit bain de métal liquide dans un four et/ou dans une cuve à l'aide d'un dispositif immergé comportant au moins un émetteur d'ultrasons,
(iii) transfert dudit bain de métal liquide ainsi traité vers un dispositif de solidification,
(iv) coulée semi-continue verticale par refroidissement direct dudit bain de métal liquide traité.

Le présent inventeur a constaté que de manière surprenante, un traitement par ultrasons réalisé en amont de la coulée permet de diminuer la dimension des micropores dans le métal solidifié même si la teneur en hydrogène et la structure granulaire ne sont pas modifiés. Ainsi, le présent inventeur n'a pas observé d'effet de dégazage lié au traitement par ultrasons mais un effet sur la dimension des micropores. Bien qu'il ne soit pas lié à une théorie particulière, le présent inventeur pense que cet effet pourrait être lié à la nucléation plus tardive des micropores lors de la solidification en raison du meilleur mouillage des inclusions par le métal liquide en présence d'ultrasons et à la fragmentation des dites inclusions par le traitement par ultrasons.
De manière surprenante, un traitement par ultrasons réalisé très en amont du dispositif de solidification, plusieurs minutes ou plusieurs dizaines de minutes avant la coulée, et qui peut n'avoir aucune ou pratiquement aucune influence sur la structure granulaire de coulée et sur la teneur en hydrogène permet néanmoins de diminuer la microporosité du produit coulé. Ainsi la structure dendritique des grains coulés est conservée, contrairement aux traitements ultrason selon l'art antérieur dans lesquels un traitement par ultrasons est effectué dans un dispositif de solidification.

L'élaboration du bain de métal liquide c'est-à-dire l'ajustement de la composition de l'alliage peut être réalisé selon des méthodes connues de l'homme du métier dans un four approprié. Comme il est connu de l'homme du métier, d'autres éléments non cités peuvent être présents à une teneur maximale de 0,05 % en poids en tant qu'impuretés ou additions mineures.

L'invention est particulièrement avantageuse pour des alliages dont la teneur en Mg est au moins 0.1 % en poids et/ou la teneur en Li est au moins 0,1 % en poids. En effet, pour ce type d'alliage, il est particulièrement difficile d'obtenir une faible teneur en hydrogène par les procédés classiques de dégazage et de plus, en raison de leur forte oxydabilité, la teneur en inclusions est en général élevée. Or de manière surprenante, la présente invention permet d'obtenir une faible densité de micropores avec une dimension supérieure à environ 90 µm, même en présence d'une teneur en hydrogène élevée. Ainsi, de manière préférée le procédé selon l'invention peut être simplifié par rapport aux procédés selon l'art antérieur en ce qu'il n'y as pas d'opération de dégazage, la teneur en hydrogène du bain de métal liquide lors de la solidification étant au moins de 0,15 ml/100g, préférentiellement au moins 0,25 ml/100g et de manière préférée au moins 0,30 ml/100g.

De plus pour la coulée de ce type d'alliage en particulier, l'introduction d'une sonde ultrasonique dans le dispositif de coulée peut s'avérer difficile voir impossible en particulier quand une atmosphère inerte doit être maintenue. Le procédé selon l'invention permet de réaliser un traitement par ultrasons sans modifier le dispositif de solidification utilisé pour la coulée semi-continue verticale par refroidissement direct.
Le procédé selon l'invention est particulièrement avantageux pour les alliages choisis parmi AA2014, AA2017, AA2024, AA2024A, AA2027, AA2139, AA2050, AA2195, AA2196, AA2296, AA2098, AA2198, AA2099, AA2199, AA2214, AA2219, AA2524, AA5019, AA5052, AA5083, AA5086, AA5154, AA5182, AA5186, AA5383, AA5754, AA5911 AA7010, AA7020, AA7040, AA7140, AA7050, AA7055, AA7056, AA7075, AA7449, AA7450, AA7475, AA7081, AA7085, AA7910, AA7975.

Le métal liquide subit un traitement par ultrasons dans un four et/ou dans une cuve (ou « poche ») à l'aide d'un dispositif immergé comportant au moins un émetteur d'ultrasons. Il est connu, par exemple de ASM Specialty Handbook « Aluminum and Aluminum Alloys, © 1993 page 530 », qu'une cuve (ou « poche ») est un récipient non poreux dans lequel le métal peut séjourner pendant une durée contrôlée dépendant de sa dimension, la cuve étant située entre le four et le dispositif de solidification et permettant de réaliser un traitement tel que par exemple la filtration du métal liquide sur un média filtrant dans une « poche de filtration » ou l'introduction dans le bain un gaz dit « de traitement » pouvant être inerte ou réactif dans une « poche de dégazage ». Il est nécessaire que le traitement à l'aide du dispositif comportant au moins un émetteur d'ultrasons soit réalisé dans une partie de l'installation de coulée dans laquelle un temps suffisant de traitement est possible, en amont du dispositif de solidification et non pas dans un chenal de transfert où le temps de séjour est trop faible. De manière préférée, il n'est pas réalisé de traitement par un gaz tel que l'argon, le chlore ou l'azote simultanément au traitement par ultrasons. De même, on évite de préférence des conditions de traitement par ultrasons générant une agitation acoustique (« acoustic streaming »). En effet, le traitement gaz et/ou l'agitation acoustique génèrent des mouvements de métal entrainant les oxydes formés en surface dans le métal liquide ce qui nuit à la qualité du métal liquide et à la dimension des micropores.

L'émetteur d'ultrasons est utilisé de préférence à une fréquence comprise entre 18 et 22 kHz.
Le temps de traitement nécessaire pour atteindre l'effet recherché sur la microporosité dépend en particulier de la puissance de l'émetteur d'ultrasons utilisé et de la quantité de métal traité. De manière préférée le traitement par ultrasons d'une unité de masse est réalisé à une puissance totale d'ultrasons P pendant une durée t tels que l'énergie P x t soit au moins égale à une énergie minimale par unité de masse Eₘᵢₙ. La durée minimale de traitement par unité de masse est ainsi égale à tₘᵢₙ = Eₘᵢₙ / P. Le présent inventeur a constaté qu'une énergie minimale Eₘᵢₙ de 4 kJ / kg, de préférence au moins 10 kJ / kg, et de manière préférée au moins 25 kJ / kg pouvait s'avérer suffisante lors du traitement d'une quantité de 16 kg en l'absence de brassage du métal liquide. Le présent inventeur pense que ces énergies minimales Eₘᵢₙ de 4 kJ / kg, de préférence 10 kJ / kg et de manière préférée de 25 kJ / kg peuvent être généralisées dans la plupart des cas à des quantités plus élevées mais pourraient cependant encore être réduites dans certains modes de réalisation, par exemple en modifiant la forme du signal acoustique et/ou en améliorant le brassage du métal liquide, de façon à atteindre une énergie minimale Eₘᵢₙ de 1 kJ / kg, ou de préférence 2 ou 3 kJ / kg.
De préférence, la puissance totale P est au moins égale à 400 W et/ou la durée t est au moins égal à 60 s.
Dans un mode de réalisation de l'invention, le traitement par ultrasons est réalisé pendant la coulée, c'est-à-dire pendant l'écoulement continu dans le dispositif de solidification du métal liquide, via une cuve (ou « poche ») de traitement. Avantageusement, la cuve est dimensionnée pour que le temps de séjour moyen d'une unité de masse soit au moins égal à tₘᵢₙ.
Dans un autre mode de réalisation préféré de l'invention le traitement à l'aide d'un dispositif comportant au moins un émetteur d'ultrasons est réalisé avant la coulée dans un four. Avantageusement, le métal liquide est brassé par un moyen électromagnétique de manière à circuler dans le volume excité par l'émetteur d'ultrasons. Un four à induction permet d'obtenir un brassage électromagnétique avantageux, la fréquence du courant utilisé dans le four à induction pouvant être ajustée pour obtenir l'effet de brassage désiré.
Ces deux modes de réalisation peuvent également être combinés si cela est souhaitable.

Il est avantageux que le bain de métal liquide soit à une température au moins égale à 690 °C et de préférence au moins égale à 700 °C lors du traitement par ultrasons. En effet, le traitement par ultrasons est d'autant plus efficace que le métal liquide est peu visqueux. Dans un mode réalisation dans lequel le traitement ultrasons est réalisé dans un four, le bain de métal liquide peut avantageusement être à une température au moins égale à 740 °C et de préférence au moins égale à 750 °C lors du traitement par ultrasons.
Le transfert du bain de métal liquide ainsi traité vers le dispositif de solidification s'effectue dans au moins un chenal (ou « goulotte »), en effet les différents fours, cuves et dispositifs de solidification sont reliés entre eux par des chenaux dans lesquels le métal liquide peut être transporté.
La durée s'écoulant entre la fin du traitement du bain de métal liquide par ultrasons et l'introduction du même bain de métal liquide dans le dispositif de solidification est au moins de quelques minutes, typiquement d'au moins trois minutes, en particulier quand le traitement par ultrasons est réalisé en cuve, ou même au moins de quelques dizaines de minutes, typiquement au moins une heure, en particulier quand le traitement par ultrasons est réalisé dans un four.

Le procédé selon l'invention permet, pour une teneur en hydrogène donnée dans le métal liquide, de diminuer la densité de micropores de grande dimension, ce qui est particulièrement avantageux pour certains alliages, tels que les alliages contenant au moins 0,1 % de Mg et/ou 0,1% de Li, pour lesquels il est difficile de réduire la teneur en hydrogène.
Dans le cadre de la présente invention, on appelle dimension d'un micropore la dimension maximale du plus petit ellipsoïde qui contient le micropore.
Le procédé selon l'invention peut comporter un nombre quelconque d'étapes de traitement supplémentaires et/ou classiques du métal liquide telles que la filtration et/ou le dégazage, ce traitement pouvant consister à filtrer le métal liquide sur un média filtrant dans une « poche de filtration » ou à introduire dans le bain un gaz dit « de traitement » pouvant être inerte ou réactif dans une « poche de dégazage ».
Le procédé selon l'invention est réalisé dans une installation de coulée semi-continue verticale par refroidissement direct comprenant au moins un four nécessaire à la fusion du métal et/ou à son maintien en température et/ou à des opérations de préparation du métal liquide et d'ajustement de la composition, au moins une cuve (ou « poche ») destinée à effectuer un traitement d'élimination des impuretés dissoutes et/ou en suspension dans le métal liquide, un dispositif de solidification du métal liquide par coulée semi-continue verticale par refroidissement direct comprenant au moins une lingotière, un faux-fond, un descenseur, au moins un dispositif d'approvisionnement du métal liquide et un système de refroidissement, ces différents fours, cuves et dispositifs de solidification étant reliés entre eux par des chenaux dans lesquels le métal liquide peut être transporté, caractérisée en ce qu'elle comprend également au moins un dispositif immergé comportant au moins un émetteur d'ultrasons positionné dans un four et/ou dans une cuve.
Avantageusement, dans l'installation de coulée selon l'invention le dispositif comprenant un émetteur d'ultrasons est positionné dans un four à induction.

Les demi-produits non corroyés obtenus par le procédé selon l'invention présentent avantageusement à mi-épaisseur une densité de micropores de dimension supérieure à 90 µm inférieure à 50 % et de préférence inférieure à 20% de la densité de micropores de dimension supérieure à 90 µm obtenue par un procédé identique mais ne comportant pas l'étape (ii) de traitement par ultrasons.
Les demi-produits obtenus par le procédé selon l'invention sont particulièrement avantageux car même lorsque leur teneur en hydrogène est élevée, la densité de micropores de grande dimension est particulièrement faible.
De plus, les demi-produits obtenus par le procédé selon l'invention sont particulièrement avantageux à l'état homogénéisé car ils présentent également dans cet état, pour lequel on observe typiquement une augmentation de la dimension des micropores, une densité de micropores de grande dimension particulièrement faible. Le traitement d'homogénéisation est un traitement thermique du demi-produit non corroyé issu de la coulée, qui est réalisé avant la déformation à chaud, à haute température, typiquement à une température supérieure à 450 °C, la température dépendant de l'alliage considéré. Lors de l'homogénéisation, les micropores ont tendance à coalescer et ainsi le volume maximal des micropores tend à augmenter et de même leur dimension tend à s'accroitre même si l'homogénéisation favorise également la globulisation, c'est à dire la réduction du rapport surface / volume.
L'homogénéisation permet d'améliorer les propriétés métallurgiques des produits, il est donc particulièrement avantageux d'obtenir un produit homogénéisé présentant une faible densité de micropores de grand diamètre.
Ainsi, de façon surprenante, les demi-produits obtenus par le procédé selon l'invention, optionnellement à l'état homogénéisé, et dont la teneur hydrogène est supérieure à 0,15 ml/100 g, voire au moins 0,25 ml/100 g et ou même au moins 0,30 ml/100g ont une densité de micropores de dimension supérieure à 90 µm inférieure 10/mm³ ou même inférieure à 5/mm³.
Les demi-produits obtenus par le procédé selon l'invention dont la teneur en lithium est au moins 0,1 % en poids et de préférence au moins 0,8 % en poids sont particulièrement avantageux.
La mesure de la teneur en hydrogène dans le solide étant délicate, on considère dans le cadre de la présente invention qu'une approximation satisfaisante de la teneur en hydrogène dans le produit solide est obtenue en mesurant la teneur en hydrogène dans le métal liquide juste avant la coulée, par des méthodes connues telles que le Telegas^{™} ou l'Alscan^{™}.

Les demi-produits obtenus par le procédé selon l'invention sont particulièrement utiles pour des applications dans lesquelles la tolérance aux dommages et notamment la tenue en fatigue des produits est importante. Les demi-produits obtenus par le procédé selon l'invention sont ainsi utilisés en particulier pour la fabrication par laminage de tôles destinées à l'industrie aéronautique pour la réalisation de longerons, de nervures, d'intrados et d'extrados et pour la fabrication par filage de profilés destinés à l'industrie aéronautique pour la réalisation de raidisseurs. De manière préférée, les demi-produits obtenus par le procédé selon l'invention sont utilisés pour la fabrication de produits obtenus avec un faible corroyage et/ou un corroyage insuffisamment compressif tels que des produits corroyés pour lesquels le rapport entre l'épaisseur du demi-produit et l'épaisseur du produit après corroyage est inférieur à 4 ou de préférence 3,5 ou 3. Ainsi les demi-produits obtenus par le procédé selon l'invention sont avantageux pour la fabrication de produits épais, dont l'épaisseur et au moins 100 mm, ou de préférence au moins 125 mm.

### Exemple

Dans cet exemple, 16 kg d'aluminium en alliage AA5182 ont été fondus dans un creuset. Le métal liquide a été maintenu à une température de 700 +/- 5 °C pendant l'essai.
La teneur en hydrogène a été mesurée à l'aide d'un appareil Alscan^{™} toujours utilisé en dehors des périodes de traitement par ultrasons pour ne pas perturber le fonctionnement de la sonde. La surface du métal liquide a été balayée en permanence par un flux de 5 l/mn d'argon. Aucun dégazage ni brassage n'a été effectué.

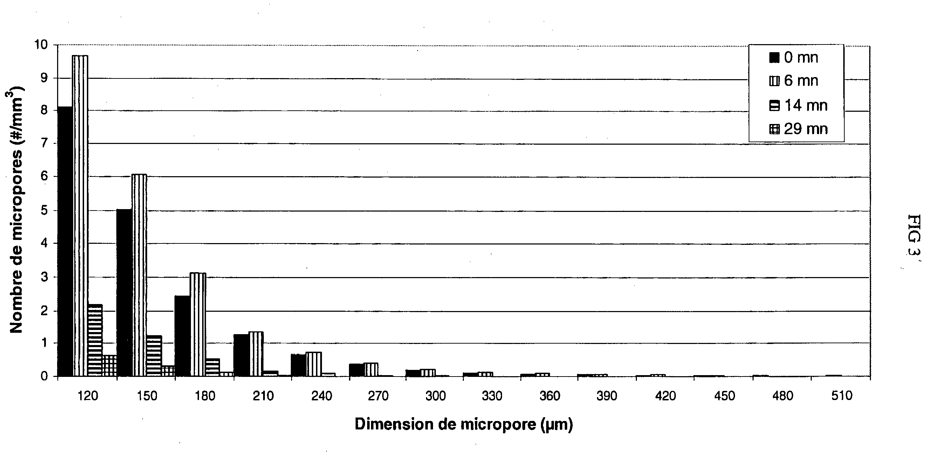

Des traitements par ultrasons ont été réalisés à l'aide d'une émetteur d'ultrasons de puissance 500 W à une fréquence de 18 kHz. Des prélèvements ont été effectués quelques minutes après chaque traitement. On considère les durées de traitement de façon cumulative : un premier traitement de 2 mn est réalisé, un second traitement de 4 mn est réalisé ce qui correspond à une durée de traitement de 2 + 4 = 6 mn, etc.
La microporosité des échantillons prélevés sous la forme de pions solidifiés à une vitesse représentative de celle d'une plaque de laminage ou une billette de filage a été caractérisée par microscopie optique. Les micrographies sont présentées sur les figures la à le et 2a à 2e.
La dimension des micropores de ces échantillons a été mesurée par tomographie X après une homogénéisation de 12h à la température de 505 °C, ce qui permet de calculer la fraction volumique de microporosité et la densité de pores de dimension supérieure à 90 µm, 210 µm ou 420 µm. L'homogénéisation a pour effet d'augmenter la dimension des micropores.
Les résultats sont présentés dans le tableau 1. L'histogramme du nombre de micropores en fonction de leur dimension est présenté sur la Figure 3.

**Tableau 1**

| Durée de traitement par ultrasons (minutes) | Micrographie | Teneur en hydrogène (ml H₂/100g) | Fraction volumique de microporosité à l'état homogénéisé (%) | Densité de pores de dimension supérieur (micropores / mm³), à l'état homogénéisé | | |
|---|---|---|---|---|---|---|
| | | | | à 90 µm | à 210 µm | à 420 µm |
| 0 | Fig 1a - Fig 2a | 0,394 | 0.129 | 19,1 | 2.9 | 0.17 |
| 2 | Fig 1b - Fig 2b | 0,287 - 0,348 | | | | |
| 6 (4+2) | Fig 1c - Fig 2c | 0,341 - 0,348 | 0.145 | 22,8 | 3.1 | 0.13 |
| 14 (8 + 4 + 2) | Fig 1d - Fig 2d | 0,327 | 0.019 | 4.5 | 0,3 | 0 |
| 29(15+8 +4+2) | Fig 1e - Fig 2e | 0.314-0.302 | 0,004 | 1.2 | 0,07 | 0 |

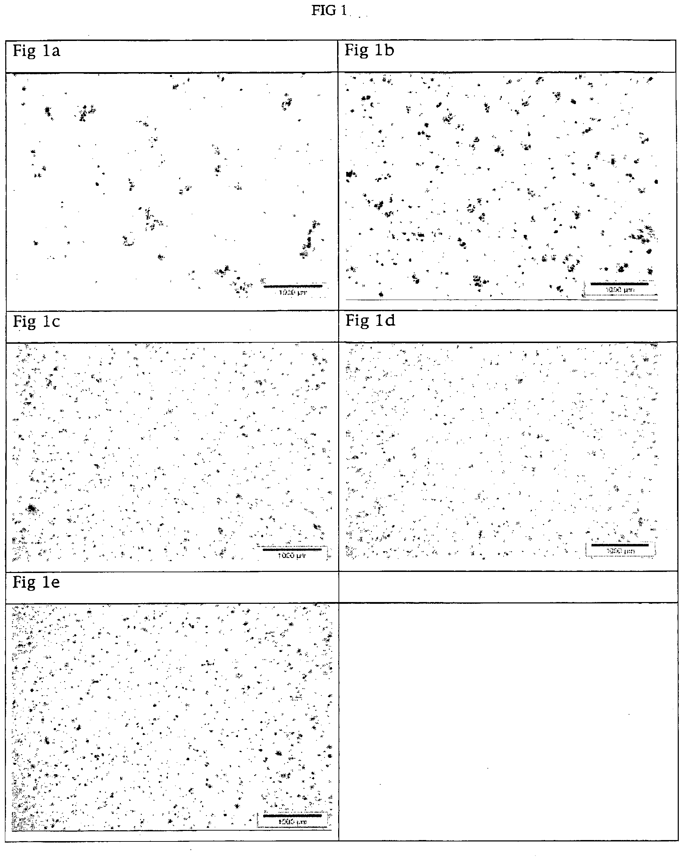

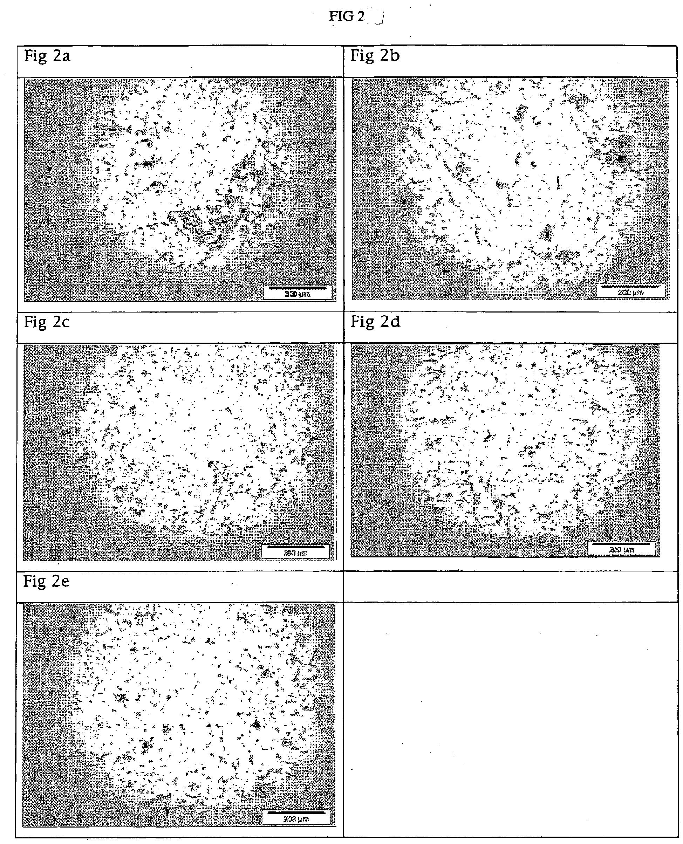

Les structures observées sont présentées sur les Figures 1 et 2 montrent qu'à l'état brut de coulée, un effet très net est observé pour un traitement de 6 minutes à 500 W alors qu'aucun effet n'est détecté pour un traitement de 2 minutes à 500 W. A l'état homogénéisé, un effet très net est observé pour un traitement de 14 minutes à 500W, pour lequel on constate une diminution de plus de 75 % des micropores de dimension supérieure à 90 µm.

## Revendications

1. Procédé de fabrication d'un demi-produit non-corroyé en alliage d'aluminium tel qu'une plaque de laminage ou une billette de filage, comprenant les étapes de
(i) élaboration d'un bain de métal liquide en alliage de composition, en % en poids,
Zn : 0 - 12
Cu : 0 - 6
Mg : 0 - 6
Li : 0-3
Ag : 0 - 1
Si < 0,5
Fe < 0,5
optionnellement au moins un parmi Cr, Zr, Mn, Hf, Ti, Sc, V, B, avec une teneur < 0,5, reste aluminium,
(ii) traitement par ultrasons dudit bain de métal liquide dans un four et/ou dans une cuve à l'aide d'un dispositif immergé comportant au moins un émetteur d'ultrasons,
(iii) transfert dudit bain de métal liquide ainsi traité vers un dispositif de solidification,
(iv) coulée semi-continue verticale par refroidissement direct dudit bain de métal liquide traité.

2. Procédé selon la revendication 1 dans lequel ledit traitement par ultrasons est réalisé à une puissance totale d'ultrasons P pendant une durée t tels que l'énergie P x t soit au moins égale à une énergie minimale par unité de masse Eₘᵢₙ de 1 kJ/kg, la durée minimale de traitement de l'unité de masse étant appelée tₘᵢₙ = Eₘᵢₙ / P.

3. Procédé selon la revendication 2 dans lequel P est au moins égal à 400 W et/ou t est au moins égal à 60 s.

4. Procédé selon la revendication 2 ou la revendication 3 dans lequel ledit traitement par ultrasons est réalisé pendant la coulée dans une cuve dimensionnée pour que le temps de séjour moyen d'une unité de masse soit au moins égal à tₘᵢₙ.

5. Procédé selon une quelconque des revendications 1 à 3 dans lequel ledit traitement par ultrasons est réalisé dans un four brassé par un moyen électromagnétique, typiquement un four à induction.

6. Procédé selon une quelconque des revendications 1 à 5 dans lequel ledit bain de métal liquide est à une température au moins égale à 690 °C lors du traitement par ultrasons.

7. Procédé selon une quelconque des revendications 1 à 6 dans lequel la durée s'écoulant entre la fin du traitement du bain de métal liquide par ultrasons et l'introduction du même bain de métal liquide dans le dispositif de solidification est au moins de quelques minutes, typiquement d'au moins trois minutes.

8. Procédé selon une quelconque des revendications 1 à 7 **caractérisé en ce que** ledit bain de métal liquide est en alliage ayant une teneur en Mg d'au moins 0.1 % en poids et/ou une teneur en Li d'au moins 0,1 % en poids.

9. Procédé selon une quelconque des revendications 1 à 8 dans lequel il n'y a pas d'opération de dégazage, la teneur en hydrogène dudit bain de métal liquide lors de la solidification étant au moins de 0,15 ml/100 g, de préférence au moins 0,25 ml/100 g et de manière préférée au moins 0,30 ml/100g.

10. Procédé selon une quelconque des revendications 1 à 9 dans lequel ledit alliage est choisi parmi AA2014, AA2017, AA2024, AA2024A, AA2027, AA2139, AA2050, AA2195, AA2196, AA2296, AA2098, AA2198, AA2099, AA2199, AA2214, AA2219, AA2524, AA5019, AA5052, AA5083, AA5086, AA5154, AA5182, AA5186, AA5383, AA5754, AA5911 AA7010, AA7020, AA7040, AA7140, AA7050, AA7055, AA7056, AA7075, AA7449, AA7450, AA7475, AA7081, AA7085, AA7910, AA7975.

11. Procédé selon une quelconque des revendications 1 à 10 dans lequel le demi-produits obtenu est utilisé pour la fabrication par laminage de tôles destinées à l'industrie aéronautique pour la réalisation de longerons, de nervures, d'intrados et d'extrados ou pour la fabrication par filage de profilés destinés à l'industrie aéronautique pour la réalisation de raidisseurs.

12. Procédé selon une quelconque des revendications 1 à 11 dans lequel, le demi-produit obtenus est utilisé pour la fabrication de produits corroyés tels le rapport entre l'épaisseur du demi-produit obtenu et l'épaisseur du produit corroyé est inférieur à 4 ou de préférence 3,5 ou 3.

13. Installation de coulée semi-continue verticale par refroidissement direct comprenant au moins un four nécessaire à la fusion du métal et/ou à son maintien en température et/ou à des opérations de préparation du métal liquide et d'ajustement de la composition, au moins une cuve destinée à effectuer un traitement d'élimination des impuretés dissoutes et/ou en suspension dans le métal liquide, un dispositif de solidification du métal liquide par coulée semi-continue verticale par refroidissement direct comprenant au moins une lingotière, un faux-fond, un descenseur, au moins un dispositif d'approvisionnement du métal liquide et un système de refroidissement, ces différents fours, cuves et dispositifs de solidification étant reliés entre eux par des chenaux dans lesquels le métal liquide peut être transporté, **caractérisée en ce que** la dite installation comprend également au moins un dispositif immergé comportant au moins un émetteur d'ultrasons étant positionné dans un four et/ou dans une cuve.

14. Installation selon la revendication 13 dans laquelle ledit dispositif comportant un émetteur d'ultrasons est positionné dans un four à induction.

## Patentansprüche

1. Verfahren zur Herstellung eines nicht umgeformten Halbzeugs aus Aluminiumlegierung wie eines Walzbarrens oder Pressbarrens mit den Schritten:
(i) Herstellen eines Flüssigmetallbads aus einer Legierung der Zusammensetzung (in Gew.-%):
Zn: 0 - 12
Cu: 0 - 6
Mg: 0 - 6
Li: 0 - 3
Ag : 0 - 1
Si < 0,5
Fe < 0,5
wahlweise mindestens ein Element unter Cr, Zr, Mn, Hf, Ti, Sc, V, B, mit einem Gehalt < 0,5, Rest Aluminium,
(ii) Behandeln des Flüssigmetallbads mit Ultraschall in einem Ofen und/oder einem Gefäß unter Verwendung einer eingetauchten Einrichtung, welche mindestens einen Ultraschallsender aufweist,
(iii) Überführen des so behandelten Flüssigmetallbads in eine Erstarrungseinrichtung,
(iv) halbkontinuierliches Vertikalstranggießen durch direkte Abkühlung des behandelten Flüssigmetallbads.

2. Verfahren nach Anspruch 1, bei dem die Ultraschallbehandlung bei einer Ultraschallgesamtleistung P für eine Zeit t durchgeführt wird, derart, dass die Energie P x t mindestens gleich einer minimalen Energie je Masseeinheit Eₘᵢₙ von 1 kJ/kg ist, wobei die minimale Behandlungszeit der Masseeinheit als tₘᵢₙ = Eₘᵢₙ / P bezeichnet wird.

3. Verfahren nach Anspruch 2, bei dem P mindestens gleich 400 W und/oder t mindestens gleich 60 s ist.

4. Verfahren nach Anspruch 2 oder Anspruch 3, bei dem die Ultraschallbehandlung während des Gießens in einem Gefäß durchgeführt wird, das so dimensioniert ist, dass die durchschnittliche Verweilzeit einer Masseeinheit mindestens gleich tₘᵢₙ ist.

5. Verfahren nach irgendeinem der Ansprüche 1 bis 3, bei dem die Ultraschallbehandlung in einem Ofen unter Rühren mit einem elektromagnetischen Mittel, typischerweise einem Induktionsofen durchgeführt wird.

6. Verfahren nach irgendeinem der Ansprüche 1 bis 5, bei dem das Flüssigmetallbad bei der Ultraschallbehandlung eine Temperatur von mindestens 690 °C hat.

7. Verfahren nach irgendeinem der Ansprüche 1 bis 6, bei dem die Zeitdauer zwischen dem Ende der Ultraschallbehandlung des Flüssigmetallbads und dem Einbringen desselben Flüssigmetallbads in die Erstarrungsvorrichtung mindestens einige Minuten, typischerweise mindestens drei Minuten beträgt.

8. Verfahren nach irgendeinem der Ansprüche 1 bis 7, **dadurch gekennzeichnet, dass** das Flüssigmetallbad aus einer Legierung besteht, die einen Mg-Gehalt von mindestens 0,1 Gew.-% und/oder einen Li-Gehalt von mindestens 0,1 Gew.-% hat.

9. Verfahren nach irgendeinem der Ansprüche 1 bis 8, bei dem kein Entgasen stattfindet, wobei der Wasserstoffgehalt des Flüssigmetallbads bei der Erstarrung mindestens 0,15 ml/100 g, vorzugsweise mindestens 0,25 ml/100 g und besonders bevorzugt mindestens 0,30 ml/100 g beträgt.

10. Verfahren nach irgendeinem der Ansprüche 1 bis 9, bei dem Legierung ausgewählt ist unter AA2014, AA2017, AA2024, AA2024A, AA2027, AA2139, AA2050, AA2195, AA2196, AA2296, AA2098, AA2198, AA2099, AA 2199, AA2214, AA2219, AA2214, AA2219, AA2524, AA5019, AA5052, AA5083, AA5086, AA5154, AA5182, AA5186, AA5383, AA5754, AA5911, AA7010, AA7020, AA7040, AA7140, AA7050, AA7055, AA7056, AA7075, AA7449, AA7450, AA7475, AA7081, AA7085, AA7910, AA7975.

11. Verfahren nach irgendeinem der Ansprüche 1 bis 10, bei dem das gewonnene Halbzeug verwendet wird für die Herstellung durch Walzen von Blechen für die Luftfahrtindustrie zur Herstellung von Holmen, Rippen, Flügelunterseiten und -oberseiten oder für die Herstellung durch Strangpressen von Profilen für die Luftfahrtindustrie zur Herstellung von Längsversteifungen.

12. Verfahren nach irgendeinem der Ansprüche 1 bis 11, bei dem das gewonnene Halbzeug verwendet wird für die Herstellung von Kneterzeugnissen, bei denen das Verhältnis zwischen der Dicke des erhaltenen Halbzeugs und der Dicke des Kneterzeugnisses kleiner als 4 oder vorzugsweise 3,5 oder 3 ist.

13. Anlage zum halbkontinuierlichen Vertikalstranggießen durch direkte Abkühlung, umfassend mindestens einen Ofen, welcher zum Schmelzen des Metalls und/oder zum Halten seiner Temperatur und/oder zum Herstellen des Flüssigmetalls und Einstellen der Zusammensetzung notwendig ist, mindestens ein Gefäß, welches dazu bestimmt ist, eine Behandlung zum Entfernen der im Flüssigmetall gelösten und/oder suspendierten Verunreinigungen durchzuführen, eine Vorrichtung zur Erstarrung des Flüssigmetalls durch halbkontinuierliches Vertikalstranggießen mit direkter Abkühlung, welche mindestens eine Kokille, einen falschen Boden, eine Absenkvorrichtung, mindestens eine Vorrichtung zur Zuführung des Flüssigmetalls und ein Kühlsystem aufweist, wobei die einzelnen Öfen, Gefäße und Erstarrungsvorrichtungen über Kanäle, in denen das Flüssigmetall transportierbar ist, miteinander verbunden sind, **dadurch gekennzeichnet, dass** die Anlage auch mindestens eine eingetauchte Einrichtung umfasst, die mindestens einen, in einem Ofen und/oder einem Gefäß angeordneten Ultraschallsender aufweist.

14. Anlage nach Anspruch 13, bei der die einen Ultraschallsender aufweisende Einrichtung in einem Induktionsofen angeordnet ist.

## Claims

1. Method of manufacturing a non-work-hardened aluminium alloy product such as a rolling ingot or an extrusion ingot comprising the following steps:
(i) produce a liquid metal bath containing alloy with the following composition, in % by weight:
Zn: 0 - 12
Cu: 0 - 6
Mg: 0 - 6
Li: 0 - 3
Ag: 0 - 1
Si < 0.5
Fe < 0.5
optionally at least one of Cr, Zr, Mn, Hf, Ti, Sc, V, B with a content of < 0.5, the remainder being aluminium,
(ii) ultrasound treatment of said liquid metal bath in a furnace and/or a tank using an immersed device containing at least one ultrasound transmitter,
(iii) transfer said liquid metal bath thus treated to a solidification device
(iv) semi-continuous vertical casting by direct cooling of said treated liquid metal bath

2. Method according to claim 1, in which said ultrasound treatment is done at a total ultrasound power P for a duration t such that the energy P x t is equal to at least a minimum energy per unit mass Eₘᵢₙ equal to 1 kJ/kg, the minimum treatment time per unit mass being denoted tₘᵢₙ =Eₘᵢₙ/P,

3. Method according to claim 2, in which P is equal to at least 400 W and/or t is equal to at least 60 s.

4. Method according to claim 2 or claim 3, in which said ultrasound treatment is done during casting in a tank sized such that the average residence time of one mass unit is equal to at least tₘᵢₙ.

5. Method according to any one of claims 1 to 3, in which said ultrasound treatment is done in a furnace stirred by an electromagnetic means, typically an induction furnace.

6. Method according to any one of claims 1 to 5, in which said liquid metal bath is at a temperature of not less than 690°C during the ultrasound treatment.

7. Method according to any one of claims 1 to 6, in which the elapsed time between the end of the ultrasound treatment of the liquid bath and when the same liquid metal bath is inserted into the solidification device is at least a few minutes, typically at least three minutes.

8. Method according to any one of claims 1 to 7, in which said liquid metal bath is an alloy with an Mg content of at least 0.1% by weight and/or an Li content of at least 0.1% by weight.

9. Method according to any one of claims 1 to 8, in which there is no degassing operation, the hydrogen content of said liquid metal bath during solidification being at least 0.15 ml/100 g, preferably at least 0.25 ml/100 g alloy and even more preferably at least 0.30 ml/100 g.

10. Method according to any one of claims 1 to 9, in which said alloy is chosen from among AA2014, AA2017, AA2024, AA2024A, AA2027, AA2139, AA2050, AA2195, AA2196, AA2296, AA2098, AA2198, AA2099, AA2199, AA2214, AA2219, AA2524, AA5019, AA5052, AA5083, AA5086, AA5154, AA5182, AA5186, AA5383, AA5754, AA5911 AA7010, AA7020, AA7040, AA7140, AA7050, AA7055, AA7056, AA7075, AA7449, AA7450, AA7475, AA7081, AA7085, AA7910 and AA7975.

11. Method according to any one of claims 1 to 10, in which the semifinished product obtained is used for the fabrication of sheet metal plates by rolling for use in the aeronautical industry to make wing spars, ribs, lower and upper skins or for the fabrication of profiles by extrusion for use in the aeronautical industry for making stiffeners.

12. Method according to any one of claims 1 to 11, in which the semifinished product obtained is used for the fabrication of work-hardened products such that the ratio between the thickness of the semifinished product obtained and the thickness of the work hardened product is less than 4 or preferably 3.5 or 3.

13. Semi-continuous vertical casting installation comprising at least one furnace necessary for melting the metal and/or for holding its temperature and/or liquid metal preparation and composition adjustment operations, at least one tank that will be used for a treatment to eliminate dissolved impurities and/or impurities in suspension in the liquid metal, a device for solidification of the liquid metal by semi-continuous vertical casting by direct cooling including at least one casting mould, a bottom block, a lowering device, at least one liquid metal feed device and a cooling system, these different furnaces, tanks and solidification devices being connected to each other by channels in which the liquid metal can be transported, **characterised in that** said installation also comprises at least one immersed device comprising at least one ultrasound transmitter being positioned in a furnace and/or in a tank.

14. Installation according to claim 13, in which said device comprising an ultrasound transmitter is placed in an induction furnace.
